# EUROPÄISCHE PATENTANMELDUNG

(11) **EP 0 977 017 A1**
(43) Veröffentlichungstag der Anmeldung: **02.02.2000**
(21) Anmeldenummer: 99890200.1
(22) Anmeldetag: 21.06.1999
(51) Int. Cl.: G01D 5/48

(54) **Verschleissmonitor**

(30) Priorität: 31.07.1998 AT 132298
(71) Anmelder: HOERBIGER VENTILWERKE GmbH, 1110 Wien (AT)
(72) Erfinder: Steinrück, Peter, Dipl.-Ing. Dr., 4830 Hallstadt (AT); Zeppelzauer, Wolfgang, Dipl.-Ing., 1140 Wien (AT); Seifert, Franz, Prof. Dipl.-Ing Dr., 1170 Wien (AT); Pohl, Alfred, Dipl.-Ing Dr., 2130 Mistelbach (AT)
(74) Vertreter: Pinter, Rudolf, Dipl.-Ing.

(57) **Zusammenfassung**

Eine insbesonders für die Verschleißüberwachung von Tragringen (7) an den Kolben (5) von horizontal arbeitenden Kolbenkompressoren geeigneter Verschleißmonitor weist einen die Dicke des Tragringes (7) zumindest indirekt überwachenden Sensor (9) auf, der im Bereich des Tragringes (7) mitbewegt angeordnet ist und über eine feststehende Abfrageeinheit (16), welche mit einer Auswerteeinheit (18) in Verbindung steht, berührungslos abfragbar ist. Der Sensor (9) weist bevorzugt ein passives Oberflächenwellen-Element (23) auf, dessen akustisches Reflexionsverhalten abhängig von der vom Verschleiß des Tragringes (7) abhängenden Dicke desselben ist und welches mit einer mitbewegten Sensorantenne (19) verbunden ist, wobei die Abfrageeinheit (16) eine damit verbundene Abfrageantenne (20) aufweist.

## Beschreibung

Die Erfindung betrifft einen Verschleißmonitor zur Überwachung der Abnützung eines relativ zu einer feststehenden Oberfläche an diese angedrückt reibend bewegten Bauteils, insbesonders zur Verschleißüberwachung von Kolbenringen und dergleichen, mit einem die Dicke des bewegten Bauteils zumindest indirekt überwachenden Sensor, welcher mit einer Auswerteeinheit in Verbindung steht.

Anordnungen der genannten Art sind in verschiedensten Zusammenhängen bekannt und dienen zumeist dazu, eine den sich abnützenden Bauteil beispielsweise als Führungselement, Dichtungselement, Bremselement oder dergleichen aufweisende Vorrichtung solange wie möglich (also bis zu einer zumeist tatsächlich objektiv gegebenen Verschleißgrenze) im Betrieb halten zu können, um die zum Austausch des abgenützten Bauteils zumeist erforderliche Stillstandszeit bezogen auf die sonstige Betriebsdauer der Vorrichtung möglichst klein zu halten. In den meisten der beispielhaft angesprochenen Anwendungsfälle ist eine direkte, beispielsweise optische Kontrolle der Abnutzung nämlich ansonsten nur durch Stillsetzung der Vorrichtung und zumeist auch teilweise Zerlegung derselben möglich, was aber für derartige, vorsichtshalber durchzuführende Kontrollen oft unakzeptable Stillstandszeiten mit sich bringt.

Im Zusammenhang mit der insbesonders angesprochenen Verschleißüberwachung von Kolbenringen und dergleichen stellt sich die grundlegende Problematik beispielsweise im Zusammenhang mit Kolbenkompressoren wie folgt dar: speziell bei nicht vertikaler Ausrichtung des Kolbens und größeren Maschinen wird heutzutage das Gewicht des Kolbens über Gleitführungen an der Zylinderlaufbüchse abgestützt. Hiefür werden am Kolben zumeist Tragringe angebracht, welche bei geschmierten Kompressoren aus metallischen Werkstoffen, vorzugsweise Weichmetallegierungen, oder aus Kunststoffen, die auf einem Schmierfilm gleiten, bestehen. Bei trockenlaufenden Hubkolbenkompressoren werden praktisch ausschließlich Tragringe aus nicht metallischen Werkstoffen (speziell Kunststoffen) mit besonders günstigen Gleiteigenschaften verwendet, welche allerdings einem gewissen Verschleiß unterworfen sind. Um Schäden an der Zylinderlaufbuchse oder am Kolben selbst zu vermeiden, dürfen diese Tragringe nur bis zu einer gewissen Restdicke verwendet werden und müssen danach getauscht werden. Für die Festlegung des Austauschzeitpunktes ist es somit wesentlich, die jeweilige Restdicke des Tragringes zu kennen. Um ein unnötiges Abstellen des Kompressors zu vermeiden, ist es wünschenswert, die Bestimmung des Tragringverschleißes ohne Zerlegen des Kompressorzylinders, am besten bei laufendem Kompressor, durchführen zu können.

Da die Messung der Restdicke des der Abnützung unterworfenen Bauteils - wie etwa des oben erwähnten Tragringes im Inneren des Zylinders eines Kolbenkompressors - wie erwähnt auf Grund der üblicherweise im Betrieb der entsprechenden Vorrichtung herrschenden Bedingungen nur schwer und auf alle Fälle unter erhöhtem Aufwand möglich ist, wurden bis jetzt verschiedene Verfahren und Vorrichtungen zur indirekten Bestimmung des Verschleißzustandes des jeweiligen Bauteiles bekannt. So wird z.B. bei den insbesonders angesprochenen Hubkolbenkompressoren bei einer aus der US 4,987,774 A bekannten Vorrichtung die vertikale Position der Kolbenstange zu indirekten Bestimmung der Restdicke von Tragringen herangezogen. Die Messung der Absenkung der Kolbenstange wird beispielsweise mit einem induktiven Geber an einer von außen leicht zugänglichen Stelle, z.B. an der dem Kurbelkasten zugewandten Seite der Kolbenstangenpackung, bestimmt. Problematisch ist dabei allerdings, daß der gemessene Abstand zwischen Sensor und Kolbenstange von zahlreichen Faktoren beeinflußt wird. Neben der eigentlich interessierenden Dicke des Tragringes spielen die vertikale Position des Kreuzkopfes des Kompressors, die Durchbiegung der Kolbenstange, das vertikale Spiel des Kolbens im Zylinder und die Entfernung des Meßpunktes vom Tragring eine letztendlich nicht genau zu berücksichtigende Rolle. Weiters beeinflussen Toleranzen, geometrische Verhältnisse und momentane Kurbelwinkelposition, sowie aber auch Verformungen zur Folge der wirkenden Kräfte, zusätzlich das Meßergebnis. Um diese störenden Einflüsse auszuschalten, wurde bei der angesprochenen bekannten Vorrichtung auch schon vorgesehen, die Bestimmung der Kolbenstangenabsenkung periodisch bei einem geeignet ausgewählten Kurbelwinkel durchzuführen, womit zahlreiche der angeführten, das Meßergebnis verfälschenden Effekte ausgeschaltet werden und der Verschleiß der Tragringe in relativ guter Näherung bestimmt werden kann. Es ist dazu allerdings die Synchronisierung der Messung mit der Maschinendrehzahl erforderlich, wofür die Signale eines an der Schwungscheibe oder an einer anderen geeigneten Stelle des Kurbeltriebs angebrachten zusätzlichen Gebers genutzt werden.

Um den zusätzlichen Installationsaufwand für einen solchen Drehposititonsgeber zu vermeiden, wurde weiters auch schon vorgeschlagen, den zeitlichen Verlauf der Kolbenstangenabsenkung über dem Hub zu registrieren und unter Verzicht auf ein drehzahl synchrones Signal durch geeignete mathematische Auswertung auf den Verschleiß der Tragringe zu schließen.

In beiden erwähnten Fällen liegt ein zusätzlicher Nachteil der induktiven Bestimmung der Kolbenstangenabsenkung in deren Empfindlichkeit gegenüber den magnetischen Eigenschaften der Kolbenstange, weil diese häufig mit einer verschleißhemmenden Beschichtung versehen wird. Diese Beschichtungen haben mitunter ungleichmäßige Wandstärken und weisen oft auch diamagnetische Eigenschaften auf, sodaß die Bestimmung der Kolbenstangenabsenkung auf diese Weise unter Umständen auch mit prinzipiellen Fehlern behaftet ist.

Weiters wurde beispielsweise gemäß EP 538 771 A1 ein Verfahren zur Diagnose des Verschleißes von bewegten Maschinenteilen vorgeschlagen, bei dem im Zusammenhang mit der Verschleißmessung an Tragringen von horizontal arbeitenden Kolbenkompressoren die Absenkung der Kolbenstange mit Hilfe eines pneumatischen Gebers bestimmt wird, welcher nach dem Düse/Prallplatte-Prinzip arbeitet und damit die oben angesprochenen Schwierigkeiten mit den induktiven Meßmethoden vermeidet. Die weiteren beschriebenen Nachteile dieser Art der Verschleißbestimmung bleiben aber auch dabei bestehen.

Zur weitergehenden Verbesserung der oben besprochenen Methoden zur Verschleißüberwachung speziell von Tragringen an Kolbenkompressoren wurden auch Systeme vorgeschlagen, bei denen die Absenkung der Kolbenstange an zwei unterschiedlichen Positionen gleichzeitig gemessen wird, womit bei Kenntnis des momentanen Kurbelwinkels durch geeignete Auswertung der Einfluß der vertikalen Lage des Kreuzkopfes eliminiert werden kann. Die theoretischen Vorteile konnten in der Praxis jedoch nicht nachgewiesen werden, weil sich offenbar die Meßfehler der beiden Messungen in ungünstiger Weise überlagern.

Aufgabe der Erfindung ist es, einen Verschleißmonitor der eingangs genannten Art so zu verbessern, daß die erwähnten Nachteile der bekannten Anordnungen und Verfahren vermieden werden und daß insbesonders auf einfache Weise eine aussagekräftige Bestimmung der Restdicke des bewegten Bauteils, wie etwa der erwähnten Tragringe von Kolbenkopressoren, möglich wird.

Diese Aufgabe wird gemäß der vorliegenden Erfindung bei einem Verschleißmonitor der eingangs genannten Art dadurch gelöst, daß der Sensor im Bereich des bewegten Bauteils mitbewegt angeordnet ist und über eine feststehende Abfrageeinheit, welche mit der Auswerteeinheit in Verbindung steht, berührungslos abfragbar ist. Damit kann also nun der die Dicke des bewegten Bauteils überwachende Sensor beispielsweise in unmittelbarer Nähe desselben auf dem bewegten Bauteil selbst bzw. auf einem mit dem bewegten Bauteil mitbewegten Träger desselben angeordnet sein, was die oben erwähnten geometrischen Störfaktoren bei den bekannten Überwachungsmethoden von vornherein ausschließt. Die irgendwo außerhalb geschützt anordenbare Abfrageeinheit kann den Sensor dann entweder kontinuierlich bzw. quasikontinuierlich oder beispielsweise ebenfalls bei bestimmten Kurbelwinkelpositionen periodisch abfragen, womit jederzeit ein Verschleißsignal zur Verfügung steht, welches nicht mehr aufwendig korrigiert zu werden braucht.

Obwohl prinzipiell als Sensor im genannten Zusammenhang jeder geeignete, berührungslos abfragbare Dickensensor in Betracht kommt, hat sich eine besonders bevorzugte Ausgestaltung der Erfindung als sehr vorteilhaft herausgestellt, gemäß welcher der Sensor ein passives Oberflächenwellen-Element aufweist, dessen akustisches Reflexionsverhalten abhängig von der vom Verschleiß des bewegten Bauteils abhängenden Dicke desselben ist und welches mit einer mitbewegten Sensorantenne verbunden ist, wobei die Abfrageeinheit eine damit verbundene Abfrageantenne aufweist. Oberflächenwellen-Elemente sind bekannte Elemente der Mikroelektronik, welche beispielsweise gemäß WO 93/13495 auch als Sensoren für die Ermittlung und Übertragung verschiedenster Meßwerte ausgebildet sein können. Es wird dabei der piezoelektrische Effekt zur elektrischen Anregung von akustischen Oberflächenwellen und zur Rückumwandlung dieser in elektrische Wechselspannungen ausgenützt. Auf einem piezoelektrischen Substrat sind dazu üblicherweise ineinander verzahnte Leiterbahnen, sogenannte Interdigitalwandler, angebracht. Einer dieser Interdigitalwandler ist elektrisch mit einer Antenne verbunden, in welche drahtlos über eine Abfrageantenne ein Hochfrequenzimpuls eingespeist wird. Dadurch wird in diesem Interdigitalwandler durch den piezoelektrischen Effekt das HF-Signal in eine akustische Oberflächenwelle umgewandelt, welche sich in Form von zwei auseinanderlaufenden Teilwellen auf dem Substrat ausbreitet. Diese beiden Teilwellen können in unabhängig voneinander auf dem Substrat aufgebrachten weiteren Interdigitalwandlern über den umgekehrten Piezoeffekt wieder in HF-Signale rückgewandelt oder auch zum Einspeisungs-Interdigitalwandler reflektiert werden, wobei verschiedene äußere Einflüsse auf das Substrat (mechanische Belastung, Temperatur,...) die Laufzeit der akustischen Wellen beeinflussen und somit aus dem letztlich über einen der weiteren Interdigitalwandler bzw. auch über den Einspeisungs-Interdigitalwandler wieder abgestrahlten Antwortsignal bzw. dessen Verzögerung Informationen über diese an Ort und Stelle auf das Substrat wirkenden Einflüsse gewonnen werden können.

Weiters ist in diesem Zusammenhang beispielsweise aus der WO 96/33423 A1 ein funkabfragbarer Sensor in Oberflächenwellentechnik bekannt, bei welchem zumindest einer der weiteren Interdigitalwandler mit einer Impedanz als sensitivem Element kombiniert ist, welche als Abschlußwiderstand mit diesem Interdigitalwandler elektrisch verbunden ist. Diese externe Impedanz wird in ihrer Größe durch die überwachte Meßgröße verändert und bestimmt damit das akustische Reflexionsverhalten des angeschlossenen Interdigitalwandlers. Insbesonders reflektiert beispielsweise ein über die externe Impedanz kurzgeschlossener Interdigitalwandler die akustische Oberflächenwelle nur minimal. Über verschiedene Realisierungen dieser als Sensor wirkenden Impedanz können verschiedenste Meß- und Überwachungsaufgaben vorgenommen werden, wobei in der genannten Schrift beispielsweise kapazitive Positions-/Wegsensoren, Feuchtesensoren, induktive Wegaufnehmer/Positionsgeber und dergleichen angesprochen sind.

Zur Verschleißüberwachung von Kunststoff-Tragringen an den Kolben von Kolbenkompressoren (speziell von nicht vertikal arbeitenden Kolbenkompressoren) ist eine besonders bevorzugte weitere Ausgestaltung der Erfindung von Vorteil, gemäß welcher die Abfrageantenne an der inneren Begrenzung des Zylinderraumes des Kolbenkompressors angeordnet und über druckdichte Anschlüsse mit der Abfrage- und Auswerteeinheit verbunden ist, wobei die Sensorantenne des Oberflächenwellen-Elementes auf dem Kolben vorzugsweise so angeordnet ist, daß sie bei der Kolbenbewegung periodisch in unmittelbare Nähe der Abfrageantenne kommt. Damit ergibt sich eine sehr einfache Anordnung, bei der von vornherein über die gegenseitige Positionierung der beiden Antennen die Messung bzw. Übertragung der Meßwerte bei einer bestimmten Position (beispielsweise in einem der Totpunkte der Kolbenbewegung) bevorzugt wird. Da sich die beiden Antennen dabei naturgemäß sehr nahe kommen, genügen bereits kleine Signalstärken, die unbeeinflußt von äußeren Störungen eine sichere Überwachung ermöglichen. Anstelle der angesprochenen Funkübertragung über Antennen könnte die drahtlose Signalübertragung natürlich in bekannter Weise auch über kapazitive oder induktive Koppelung erfolgen.

Der Sensor kann in bevorzugter weiterer Ausgestaltung der Erfindung ein unabhängig vom Tragring in dessen Nähe am Kolben, vorzugsweise an dessen Unterseite, angeordnetes Verschleißelement aufweisen, welches gleich oder leichter abreibbar wie der Tragring ist und dessen radiale Dicke über das Oberflächenwellen-Element und die Abfrage- und Auswerteeinheit abfragbar ist. Diese Ausführung ist insbesonders deshalb vorteilhaft, weil derartige Tragringe oft frei drehbar relativ zum Kolben auf diesem (zumeist in Nuten) gelagert sind, sodaß eine gleichbleibende gegenseitige Ausrichtung der beiden Antennen nur durch zusätzliche Maßnahmen sichergestellt werden könnte, wenn das Oberflächenwellen-Element samt Sensorantenne auf dem Tragring selbst angeordnet würde. Weiters bietet diese Lösung auch Vorteile im Hinblick auf die Herstellung der Tragringe, in die damit kein piezoelektrisches Substrat für das Oberflächenwellen-Element impliziert werden muß. Auch ist die Größe dieses Oberflächenwellen-Elementes bzw. der zugehörigen Sensorantenne kein Kriterium, wenn diese Elemente auf dem separaten Verschleißelement in der Nähe des Tragringes angeordnet werden.

Dieses separate Verschleißelement kann nach einer anderen bevorzugten Weiterbildung der Erfindung das Dielektrikum eines mit einem Reflexions-Interdigitalwandler des Oberflächenwellen-Elementes verbundenen Plattenkondensators bilden, dessen kolbenseitige Platte vom Kolben oder einer leitenden Elektrode des Verschleißelementes und dessen andere Platte von der leitenden inneren Begrenzung des Zylinderraumes gebildet ist und dessen vom Abstand der beiden Platten bestimmte Kapazität über das Oberflächenwellen-Element das Sensorsignal liefert. Dies ergibt eine einfache und robuste Ausführung des oben bereits angesprochenen Abschlusses für den Reflexions-Interdigitalwandler, welcher sich unmittelbar abhängig von der Restdicke des bezüglich seines Verschleißes überwachten Tragringes so ändert, daß dies im Antwortsignal des Oberflächenwellen-Elementes leicht feststellbar ist.

Besonders bevorzugt ist im letztgenannten Zusammenhang eine Ausgestaltung der Erfindung, gemäß welcher die Kapazität des Plattenkondensators zusammen mit der Induktivität seiner Verbindungsleitungen (zum Interdigitalwandler) eine Impedanz in der Nähe der jeweiligen Serien-Resonanz für den Reflexions-Interdigitalwandler darstellt. Damit ist im wesentlichen der bereits oben angesprochenen Kurzschluß des Reflexions-Interdigitalwandlers erreicht, der die akustische Oberflächenwelle nur minimal reflektiert, solang die Impedanz sich nicht zur Folge fortschreitender Abnutzung ändert. In der Nähe der Resonanz stellt diese Ausführung einen sehr empfindlichen Meßkreis für Verändungen der Impedanz dar, wobei die sehr steile Impedanzänderung in der Nähe der Serienresonanz für die Messung des Verschleißvorganges herangezogen wird.

Das Verschleißelement kann in anderer Ausgestaltung der Erfindung aber auch einen sich mit abnehmender Dicke ändernden Widerstand und/oder eine sich entsprechend ändernde Induktivität aufweisen, welche mit dem Reflexions-Interdigitalwandler des Oberflächenwellen-Elementes verbunden sind. Diese für verschiedene Anwendungen durchaus vorteilhafte Ausgestaltung ergibt für sich alleine aber im Gegensatz zur oben beschriebenen Ausbildung mit dem Resonanzkreis kein absolutes Reflexionsminimum, womit die Auflösung der Meßgröße entsprechend kleiner wird. Soferne die erwähnte Indukitvität aber beispielsweise mit einer konstanten Kapazität zu einem Schwingkreis kombiniert wird können die diesbezüglich erwähnten Vorteile wieder erhalten werden.

Der Sensor kann nach einer anderen bevorzugten Ausgestaltung der Erfindung ein unabhängig vom Tragring in dessen Nähe am Kolben angeordnetes Gleitstück mit gegenüber dem Tragring vernachlässigbarer Abnutzung aufweisen, welches elastisch an die Innenwand des Zylinders angedrückt ist und mechanisch auf das Oberflächenwellen-Element einwirkt. Damit wird die bereits angesprochene Abhängigkeit der sich auf dem Substrat ausbreitenden akustischen Oberflächenwellen von einer mechanischen Beeinflussung des Substrats, beispielsweise durch eine Verbiegung des einseitig eingespannten Substrats, zur Gewinnung des eigentlichen Sensorsignals ausgenutzt, was eine sehr robuste und gegen Störungen unempfindliche Anordung ergibt.

Das Oberflächenwellen-Element kann nach einer weiteren bevorzugten Ausgestaltung der Erfindung aber auch zusätzlich zum dickenabhängig beeinflußten Reflexions-Interdigitalwandler noch zumindest einen weiteren Reflexions-Interdigitalwandler mit von der Dicke des bewegten Bauteils unabhängigem akustischem Reflexionsverhalten aufweisen, womit beispielsweise über die Temperaturabhängigkeit dieser Reflexion die Temperaturabhängigkeit der eigentlichen Verschleißüberwachung kompensiert werden kann oder auch separate Messungen, beispielsweise der Temperatur oder der Feuchtigkeit, durchgeführt werden können.

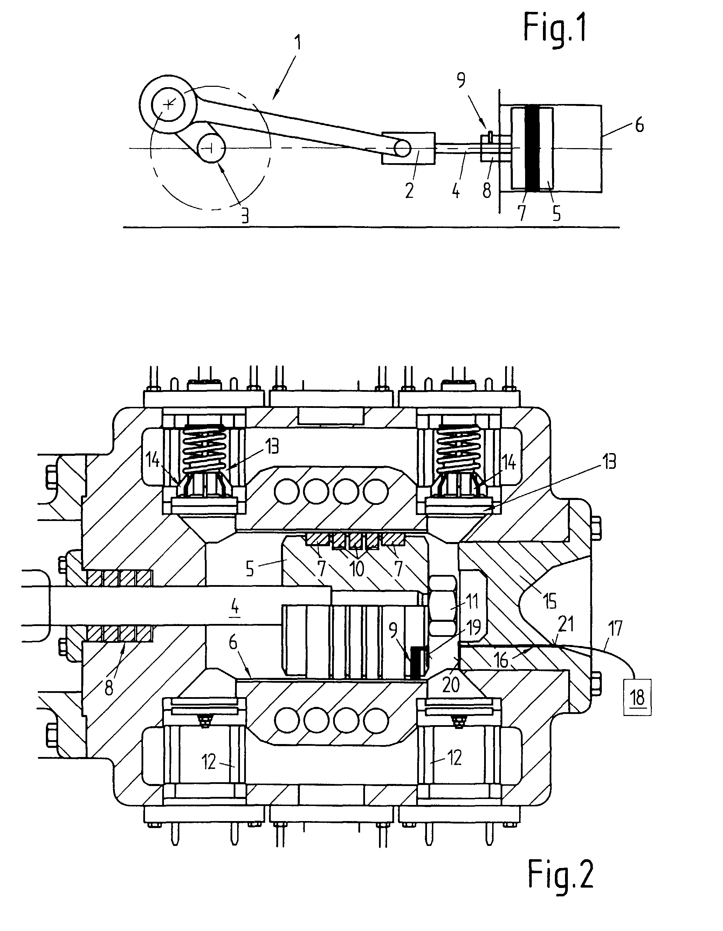

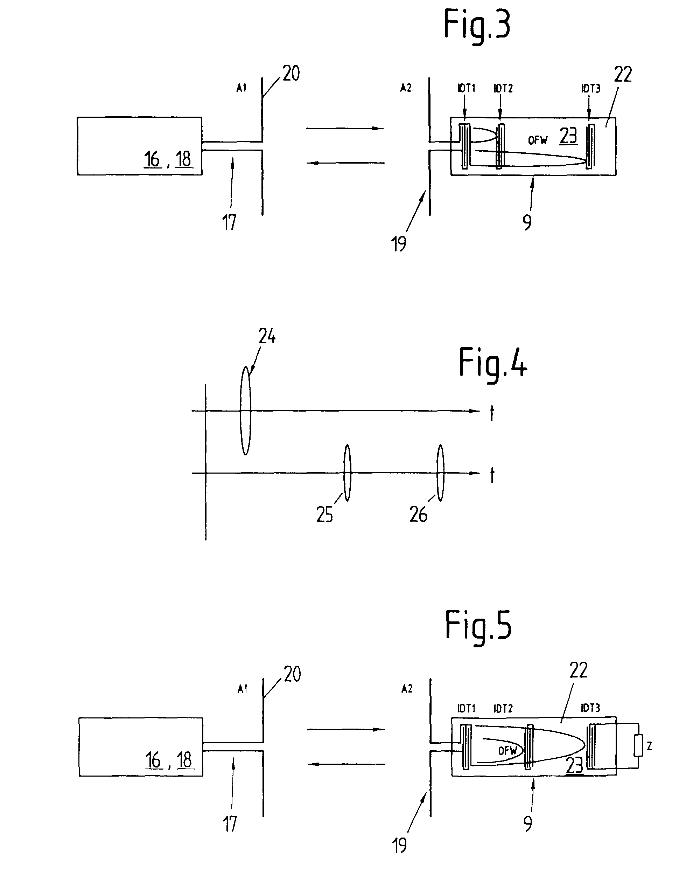

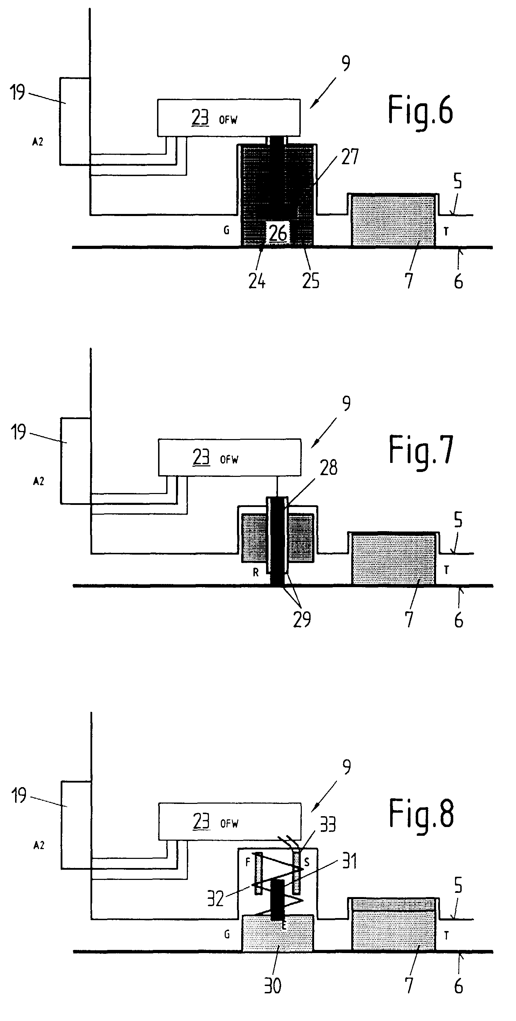

Die Erfindung wird im folgenden noch anhand der in der Zeichnung schematisch dargestellten Ausführungsbeispiele näher erläutert. Fig.1 zeigt dabei eine Skizze zum Stand der Technik betreffend Verschleißüberwachung von Tragringen von Hubkolbenkompressoren, Fig.2 zeigt einen teilweisen Schnitt im Zylinderbereich eines horizontal arbeitenden Hubkolbenkompressors mit einem erfindungsgemäßen Verschleißmonitor, Fig.3 zeigt die prinzipielle Anordnung eines berührungslos abgefragten passiven Oberflächenwellen-Elementes als Sensor, Fig.4 zeigt schematisch Abfrage- und Antwortimpuls bei einer Anordnung gemäß Fig.3, Fig.5 zeigt in einer der Fig.3 entsprechenden Darstellung eine Ausgestaltung, bei welcher einer der Reflexions-Interdigital-wandler mit einer außenliegenden Impedanz als Sensorelement einen Serienschwingkreis bildet, und die Fig.6 bis 9 zeigen in vergrößerter und teilweise geschnittener Darstellung Ausgestaltungen eines erfindungsgemäßen Verschleißmonitors an einem Hubkolbenkompressor gemäß Fig.2.

Die den Stand der Technik darstellende Fig.1 zeigt schematisch einen Teil eines horizontal arbeitenden Kolbenkompressors. Über den Kurbeltrieb 1 und den Kreuzkopf 2 wird die Drehbewegung der Kurbelwelle 3 in eine hin und her gehende Bewegung der Kolbenstange 4 samt Kolben 5 umgesetzt, wodurch letzterer in Zusammenwirkung mit dem Zylinder 6 (und den hier nicht dargestellten Einlaß- und Auslaßventilen) das über eine ebenfalls nicht dargestellte Einlaßleitung zugeführte Medium verdichtet in eine ebenfalls nicht dargestellte Auslaßleitung fördert. Die Abstützung des überlicherweise auch mit die Abdichtung im Zylinder 6 bewerkstelligenden Kolbenringen (nicht dargestellt) versehenen Kolbens 5 relativ zum Zylinder 6 erfolgt hier über einen mittig am Kolben 5 vorgesehenen Tragring 7, welcher im Falle eines ungeschmiert laufenden Kompressors üblicherweise aus nichtmetallischem Werkstoff mit besonders günstigen Gleiteigenschaften (diverse Kunststoffe) besteht und deshalb im Betrieb einem gewissen Verschleiß unterworfen ist. Um nun bei laufendem Kompressor ohne Öffnung des Zylinders 6 Auskunft über die Abnutzung des Tragringes 7 geben zu können, ist im Bereich der Dichtungspackung 8 an der Durchführung der Kolbenstange 4 in den Zylinder 6 ein Sensor 9 vorgesehen, der beispielsweise induktiv die Absenkung der Kolbenstange 4 relativ zum Zylinder 6 überwacht und an eine hier nicht weiter dargestellte Auswerteeinheit übermittelt. Sobald das Signal des Sensors 9 eine zumeist empirisch ermittelte Grenzabsenkung der Kolbenstange 4 anzeigt, ab der der Tragring 7 nicht mehr mit Sicherheit den Kontakt zwischen Kolben 5 und Innenwand des Zylinders 6 verhindert, kann der Kompressor angehalten und nach der erforderlichen Teil-Demontage der Tragring 7 ausgetauscht werden.

Zur Folge der Führung des Kolbens 5 im Zylinder 6 und des Kreuzkopfs 2 auf seinen hier nicht dargestellten Führungen sowie der vom Tragring 7 im Betrieb des Kompressors variabel beabstandeten Anordnung des Sensors 9 können Schwierigkeiten bei der Zuordnung des Signals des Sensors 9 zur tatsächlichen Abnutzung des Tragrings 7 der eingangs bereits angesprochenen Art entstehen, welche letztendlich aus Sicherheitsgründen zumeist dazu führen, daß der Tragring 7 bereits getauscht wird, obwohl seine tatsächliche Abnützung dies noch nicht erforderlich machen würde.

In Fig.2 ist nur der gemäß Fig.1 rechte Bereich eines erfindungsgemäß ausgerüsteten Kolbenkompressors etwas detaillierter dargestellt. Der Kolben 5 ist hier über zwei außenliegende Tragringe 7 gegenüber der Innenwand des Zylinders 6 abgestützt, wobei zwischen den beiden Tragringen 7 drei separate Kolbenringe 10 angedeutet sind. Der Kolben 5 ist mittels einer Mutter 11 auf der Kolbenstange 4 befestigt, welche durch die Dichtungspackung 8 nach außen geführt ist und - auf hier nicht dargestellte Weise - entsprechend wie in Fig.1 dargestellt, über einen Kreuzkopf angetrieben wird. Weiters ist hier noch auf beidseitig angeordnete Druckventile 12 sowie ebenfalls beidseitig vorgesehene Saugventile 13 zu verweisen, die, wie bei derartigen Kompressoren üblich, selbsttätig ausgeführt sind, wobei die Saugventile 13 in der dargestellten Ausführung mit Abhebegreifern 14 ausgerüstet sind, die auf bekannte und hier nicht näher interessierende Weise eine Regelung der Förderleistung des Kompressors erlauben.

Der Sensor 9 zur indirekten Überwachung des Verschleißes der Tragringe 7 ist hier nun auf der Seite des Deckels 15 des Zylinders 6 im Bereich des dortigen Tragrings 7 mitbewegt angeordnet und über eine im Bereich des Deckels 15 feststehend angeordnete Abfrageeinheit 16, welche über eine Leitung 17 mit einer Auswerteeinheit 18 in Verbindung steht, berührungslos abfragbar. Der Sensor 9 weist dazu auf zu den Fig.3 bis 8 noch näher beschriebene Weise ein passives Oberflächenwellen-Element auf, dessen akustisches Reflexionsverhalten abhängig von der vom Verschleiß des Tragringes 7 abhängenden Dicke desselben ist und welches mit einer mitbewegten Sensorantenne 19 verbunden ist. Die Abfrageeinheit 16 weist eine damit verbundene Abfrageantenne 20 auf, welche an der inneren Begrenzung des Zylinderraumes (6) des Kompressors angeordnet und über druckdichte Anschlüsse 21 mit der Abfrage- und Auswerteeinheit (18) verbunden ist. Die Sensorantenne 19 ist auf dem Kolben 5 so angeordnet, daß sie bei der Kolbenbewegung periodisch in die Nähe der Abfrageantenne 20 kommt - hier im Bereich des oberen Totpunktes des Kolbens 5.

Die Funktion des Sensors 9 in Fig.2 bzw. dessen Abfragung wird im folgenden anhand der Fig.3 bis 5 allgemein näher erläutert:

Auf einem piezoelektrischen Substrat 22 sind zur Bildung eines bekannten Oberflächenwellen-Elementes 23 als ineinander verzahnte Leiterbahnen ausgebildete Interdigitalwandler (IDT 1 - IDT 3) ausgebildet, von denen hier IDT 1 elektrisch mit der Sensorantenne 19 verbunden ist. Von der Abfrageantenne 20 der Abfrageeinheit 16 wird ein über die Leitung 17 zugeführter Hochfrequenzimpuls abgestrahlt, der in Fig.4 mit 24 angedeutet ist. Dieser Hochfrequenzimpuls wird berührungslos in die Sensorantenne 19 eingespeist und dann über IDT 1 durch den piezoelektrischen Effekt des Substrates 22 in eine akustische Oberflächenwelle umgewandelt. Diese breitet sich an sich in Form von zwei auseinanderlaufenden Teilwellen auf dem Substrat 22 aus, wobei hier die nach links laufende Welle am Rand des Substrats 22 in einem nicht weiter dargestellten Absorber dissipiert wird. Die nach rechts laufende Teilwelle wird an jedem der angebrachten weiteren IDT 2, IDT 3,... (es könnten auch mehrere vorgesehen sein) als akustische Oberflächenwelle reflektiert, da in diesen IDT's zuerst eine Rückwandlung der akustischen Oberflächenwelle in ein HF-Signal (auf Grund des umgekehrten Piezoeffekts) und damit wieder die Anregung der Reflexionswelle auf Grund des normalen Piezoeffektes erfolgt. Die reflektierten Teilwellen werden nach der jeweiligen akustischen Laufzeit von einigen Mikrosekunden im IDT 1 wieder in HF-Impulse zurückgewandelt und über die Sensorantenne 19 zur Abfrageantenne 20 rückübertragen - die entsprechenden Impulse sind in Fig.4 mit 25 und 26 angedeutet.

Wenn nun das Substrat 22 beispielsweise durch Wärmeeinwirkung oder mechanische Deformation durch äußere Kräfte beeinflußt wird, so verändert dies die Ausbreitungseigenschaften der Oberflächenwellen. Das Element 23 kann damit unmittelbar als Sensor 9 verwendet werden, indem die Laufzeit der Oberflächenwellen zwischen den IDT's in der Abfrageeinheit 16 bzw. Auswerteeinheit 18 bestimmt wird. Es können damit drahtlos z.B. Temperatur, Deformation und alle in diese Größen konvertierbaren physikalischen Einflüsse auf den Sensor 9 gemessen werden, welcher außer dem per Funk zugeführten Abfragesignal keine weitere Energiequelle benötigt, und in einem weiten Temperatur- und Druckbereich reproduzierbare Ergebnisse liefert. Bereits in dieser einfachen Form könnte der Sensor 9 in einer Anordnung gemäß Fig.2 also zur Verschleißüberwachung der Tragringe 7 eingesetzt werden, indem das Substrat 22 beispielsweise so am Kolben 5 angeordnet wird, daß es (entweder direkt oder über eine Hebelumlenkung oder dergleichen) bei abnehmender Dicke der Tragringe 7 mechanisch verbogen wird, was auf beschriebene Weise überwacht bzw. berührungslos abgefragt werden kann.

Bei der Anordnung nach Fig.5 ist im Gegensatz zu Fig.3 nun IDT 3 (es könnte aber auch IDT 2 oder ein anderer IDT sein) mit einer externen Abschlußimpedanz Z verbunden, welche das akustische Reflexionsverhalten dieses IDT 3 bestimmt und auf beispielsweise in Fig.6 dargestellte Weise vom Tragringverschleiß beeinflußt wird. Wird wieder über IDT 1 ein über die Abfrageantenne 20 zugefunkter Oberflächenwellen-Impuls angeregt, an IDT 3 auf beschriebene Weise reflektiert und als HF-Impuls an die Abfrageeinheit 16 zurückgefunkt, so ändern sich hier die Amplituden- und Phasenverhältnisse des um die doppelte Laufzeit der Oberflächenwelle zwischen IDT 1 und IDT 3 verzögerten Antwortsignals in Abhängigkeit von der Abschlußimpedanz Z. Insbesonders reflektiert beispielsweise ein kurzgeschlossener IDT 3 die Oberflächenwelle nur minimal. Ein Kurzschluß dieses IDT 3 kann z.B. dadurch erreicht werden, daß die Abschlußimpedanz Z zusammen mit den Verbindungsinduktivitäten und parasitären Kapazitäten einen resonanten Serienschwingkreis bildet. In der Nähe der Serienresonanz stellt also die Abschlußimpedanz Z in Verbindung mit der Oberflächenwellen-Verzögerungsstrecke einen sehr empfindlichen Meßkreis für Veränderungen von Z dar. Davon abgesehen könnte anstelle des Aufbaus des Serienschwingkreises mit der Abschlußimpedanz Z an IDT 3 aber auch ein sich mit dem Verschleiß des Tragringes 7 ändernder Ohm'scher Widerstand oder eine sich entsprechend ändernde Induktivität angeschlossen werden (siehe auch Fig.7 und 8.), wobei aber im Gegensatz zur Ausbildung mit Resonanzkreis kein absolutes Reflexionsminimum an IDT 3 erreichbar ist (soferne nicht mit zusätzlichen Maßnahmen wieder die Resonazbedingungen erfüllt werden) und die Auflösung der Meßgröße entsprechend kleiner wird.

In Fig.6 ist eine Möglichkeit zur Annäherung der oben beschriebenen Serienresonanz durch entsprechenden Aufbau des Sensors 9 dargestellt. Der Sensor 9 weist hier ein unabhängig vom Tragring 7 in dessen Nähe am Kolben 5, vorzugsweise an dessen Unterseite, angeordnetes Verschleißelement 24 auf, welches gleich oder leichter abreibbar wie der Tragring 7 ist und dessen radiale Dicke über das Oberflächenwellen-Element 23 und die hier nicht dargestellte Abfrage- und Auswerteeinheit abfragbar ist. Das Verschleißelement bildet dazu in seinem der Wand des Zylinders 6 zugewandten Bereich das Dielektrikum 25 eines mit dem Reflexions-Interdigitalwandler (IDT 3 in Fig.5) des Oberflächenwellen-Elementes 23 verbundenen Plattenkondensator 26, dessen kolbenseitige Platte 27 hier von einer separaten leitenden Elektrode des Verschleißelementes 24 und dessen andere Platte hier von der leitenden inneren metallischen Begrenzung des Zylinders 6 gebildet ist. Bei entsprechender Ausführung des Verschleißelementes 24 könnte die kolbenseitige Platte 27 aber auch beispielsweise vom Kolben selbst oder einer Beschichtung des Verschleißelementes 24 an seinem kolbenseitigen Ende gebildet sein. Die vom Abstand der beiden Platten und damit vom Verschleiß des benachbarten Tragrings 7 bestimmte Kapazität des Plattenkondensators 26 liefert damit über das Oberflächenwellen-Element 23 das Sensorsignal. Wie beschrieben kann diese Kapazität des Plattenkondensators 26 so ausgelegt werden, daß zusammen mit der Induktivität der Verbindungsleitungen (zu IDT 3 in Fig.5) eine Impedanz Z in der Nähe der Serienresonanz für IDT 3 gebildet wird. Verschleißt das Verschleißelement 24 zusammen mit dem Tragring 7, so verändert sich die Impedanz Z für IDT 3 und damit in beschriebender Weise dessen akustische Reflektivität. Hohe Empfindlichkeit der Messung wird dabei so eingestellt, daß die sehr steile Impedanzänderung in der Nähe der Serienresonanz für die Messung des Verschleißvorganges herangezogen wird.

Gemäß Fig.7 wird anstelle eines Kondensators nun ein veränderlicher Widerstand 28 an das Oberflächenwellen-Element 23 (bzw. IDT 3 in Fig.5) angeschlossen, womit naturgemäß ebenfalls eine Änderung der Reflektivität von IDT 3 einhergeht, wobei aber kein absolutes Reflexionsminimum erreichbar ist und die Auflösung der Meßgröße entsprechend kleiner wird. Zusätzlich können entsprechend weiche metallische Anschlagkontakte 29 (z.B. aus Kupfer) zur Warnung vor dem maximal zulässigen Verschleiß vorgesehen sein.

Bei der Ausführung gemäß Fig.8 ist ein nicht oder entsprechend gering verschleißendes Gleitstück 30 und ein damit verbundener Eisenkern 31 vorgesehen, der bei abnehmender Dicke des Tragringes 7 gegen die Kraft einer Feder 32 in eine Spule 33 gedrückt wird, und damit die Induktivität dieser wiederum mit dem Oberflächenwellen-Element 23 (bzw. dessen IDT 3) verbundenen Spule 33 verschleißabhängig verändert.

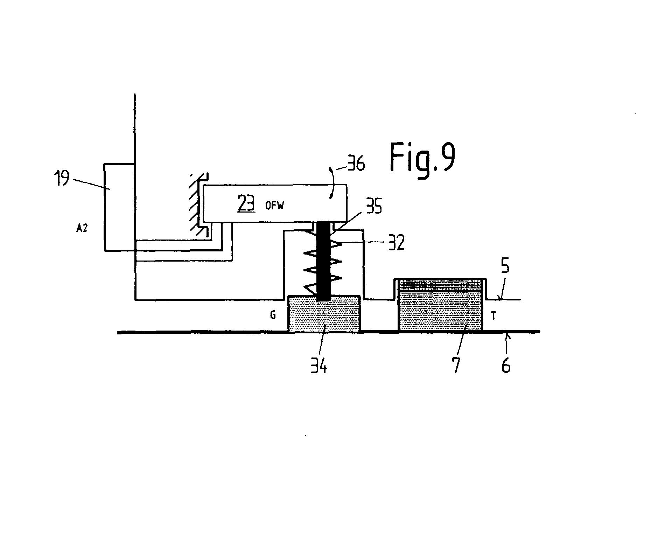

Gemäß Fig.9 ist ein ebenfalls unabhängig vom Tragring 7 in dessen Nähe am Kolben 5 angeordnetes Gleitstück 34 vorgesehen, welches wiederum eine gegenüber dem Tragring 7 vernachlässigbare Abnutzung aufweist und über eine Feder 32 abgestützt in einer entsprechenen Ausnehmung des Kolbens 5 radial geführt ist. Über einen Dorn 35 wirkt das Gleitstück 34 auf das beispielsweise links einseitig eingespannte Oberflächenwellen-Element 23 in Richtung des Pfeiles 36 ein, womit die sich auf dem Substrat des Elementes 23 ausbreitenden akustischen Oberflächenwellen in beschriebener Weise abhängig von der Abnutzung des Tragringes 7 beeinflußbar sind.

Um unabhängig vom Funkkanal und dem restlichen Übertragungsweg die Amplitude des an IDT 3 beispielsweise durch Z bestimmt reflektierten Oberflächenwellen-Impulses auswerten zu können, ist auf dem Substrat 22 gemäß Fig.5 zumindest noch ein weiterer reflektierender IDT (IDT 2) mit verschleißunabhängigem akustischem Reflexionsverhalten aufgebracht. Damit wird der Meßeffekt durch Verhältnisbildung der an IDT 3 und IDT 2 reflektierten akustischen Impulse bestimmbar. Weiters könnte auch die Temperatur des Oberflächenwellen-Substrates 22 aus der akustischen Laufzeit zwischen den einzelnen Reflexionen bestimmt werden, was beispielsweise im Zusammenhang mit der Anordnung gemäß Fig.2 eine sehr vorteilhafte Temperaturmessung im Bereich des zugeordneten Druckventils 12 ermöglicht. Auch könnte eine derartige Temperaturmessung zur Kompensation von Auswirkungen von Temperaturänderungen auf die Verschleißmessung verwendet werden. Ebenfalls möglich wäre weiters die Verwendung mehrerer separater Oberflächenwellen-Elemente etwa zur Ermittlung der Symmetrie der Abnützung der Tragringe 7 oder zur separaten Bestimmung physikalischer Größen wie Druck, Temperatur, Gaszusammensetzung und dergleichen.

## Patentansprüche

1. Verschleißmonitor zur Überwachung der Abnützung eines relativ zu einer feststehenen Oberfläche (6) an diese angedrückt reibend bewegten Bauteils (7), insbesonders zur Verschleißüberwachung von Kolbenringen und dergleichen, mit einem die Dicke des bewegten Bauteils (7) zumindest indirekt überwachenden Sensor (9), welcher mit einer Auswerteeinheit (18) in Verbindung steht, **dadurch gekennzeichnet,** daß der Sensor (9) im Bereich des bewegten Bauteils (7) mitbewegt angeordnet ist und über eine feststehende Abfrageeinheit (16), welche mit der Auswerteeinheit (18) in Verbindung steht, berührungslos abfragbar ist.

2. Verschleißmonitor nach Anspruch 1, dadurch gekennzeichnet, daß der Sensor (9) ein passives Oberflächenwellen-Element (23) aufweist, dessen akustisches Reflexionsverhalten abhängig von der vom Verschleiß des bewegten Bauteils (7) abhängenden Dicke desselben ist und welches mit einer mitbewegten Sensorantenne (19) verbunden ist, und daß die Abfrageeinheit (16) eine damit verbundene Abfrageantenne (20) aufweist.

3. Verschleißmonitor nach Anspruch 2 zur Verschleißüberwachung von Kunststoff-Tragringen (7) an den Kolben (5) von Kolbenkompressoren, dadurch gekennzeichnet, daß die Abfrageantenne (20) an der inneren Begrenzung des Zylinderraumes (6) des Kolbenkompressors angeordnet und über druckdichte Anschlüsse (21) mit der Abfrage- und Auswerteeinheit (16, 18) verbunden ist und daß die Sensorantenne (19) des Oberflächenwellen-Elementes (23) auf dem Kolben (5) vorzugsweise so angeordnet ist, daß sie bei der Kolbenbewegung periodisch in unmittelbare Nähe der Abfrageantenne (20) kommt.

4. Verschleißmonitor nach Anspruch 3, dadurch gekennzeichnet, daß der Sensor (9) ein unabhängig vom Tragring (7) in dessen Nähe am Kolben (5), vorzugsweise an dessen Unterseite, angeordnetes Verschleißelement (24) aufweist, welches gleich oder leichter abreibbar wie der Tragring (7) ist und dessen radiale Dicke über das Oberflächenwellen-Element (23) und die Abfrage- und Auswerteeinheit (16, 18) abfragbar ist.

5. Verschleißmonitor nach Anspruch 4, dadurch gekennzeichnet, daß das Verschleißelement (24) das Dielektrikum (25) eines mit einem Reflexions-Interdigitalwandler (IDT 3) des Oberflächenwellen-Elementes (23) verbundenen Plattenkondensators (26) bildet, dessen kolbenseitige Platte (27) vom Kolben (5) oder einer leitenden Elektrode des Verschleißelementes (24) und dessen andere Platte von der leitenden inneren Begrenzung des Zylinderraumes (6) gebildet ist und dessen vom Abstand der beiden Platten bestimmte Kapazität über das Oberflächenwellen-Element (23) das Sensorsignal liefert.

6. Verschleißmonitor nach Anspruch 4, dadurch gekennzeichnet, daß die Kapazität des Plattenkondensators (26) zusammen mit der Induktivität seiner Verbindungsleitungen eine Impedanz (Z) in der Nähe der jeweiligen Serienresonanz für den Reflexions-Interdigitalwandler (IDT 3) darstellt.

7. Verschleißmonitor nach einem oder mehreren der Ansprüche 4 bis 6, dadurch gekennzeichnet, daß das Verschleißelement (24) einen sich mit abnehmender Dicke ändernden Widerstand (28) und/oder eine sich entsprechend ändernde Induktivität (33) aufweist, welche mit dem Reflexions-Interdigital-Wandler (IDT 3) des Oberflächenwellen-Elementes (23) verbunden sind.

8. Verschleißmonitor nach Anspruch 3, dadurch gekennzeichnet, daß der Sensor (9) ein unabhängig vom Tragring (7) in dessen Nähe am Kolben (5) angeordnetes Gleitstück (34) mit gegenüber dem Tragring (7) vernachlässigbarer Abnutzung aufweist, welches elastisch an die Innenwand des Zylinders (6) angedrückt ist und mechanisch auf das Oberflächenwellen-Element (23) einwirkt.

9. Verschleißmonitor nach einem oder mehreren der Anprüche 2 bis 8, dadurch gekennzeichnet, daß das Oberflächenwellen-Element (23) zusätzlich zum dickenabhängig beeinflußten Reflexions-Interdigitalwandler (IDT 3) noch zumindest einen weiteren Reflexions-Interdigitalwandler (IDT 2) mit von der Dicke des bewegten Bauteils unabhängigem akustischem Reflexionsverhalten aufweist.
